# EUROPÄISCHE PATENTSCHRIFT

(11) **EP 1 974 711 B1**
(45) Veröffentlichungstag und Bekanntmachung des Hinweises auf die Patenterteilung: **16.02.2011**
(21) Anmeldenummer: 08003987.8
(22) Anmeldetag: 04.03.2008
(51) Int. Cl.: A61H 33/02, F16L 31/02, F16L 41/14

(54) **Vorrichtung für den Einsatz zur Verteilung von flüssigen und/oder gasförmigen Medien aus Schläuchen oder Rohren**
Device for dispensing a liquid and/or a gas from flexible tubes or pipes
Dispositif pour la distribution de fluides liquides ou gazeux depuis des tuyau flexibles ou conduites

(30) Priorität: 30.03.2007 DE 202007004791 U; 30.03.2007 DE 202007004790 U
(43) Veröffentlichungstag der Anmeldung: 01.10.2008
(73) Patentinhaber: REHAU AG + Co, 95111 Rehau (DE)
(72) Erfinder: Goldstein, Jörg, 95028 Hof (DE); Schwarz, Michael, 95100 Selb (DE)

(56) Entgegenhaltungen:
- EP-A- 1 243 835
- EP-A1- 1 389 457
- WO-A-03/001103
- DE-A1- 3 731 633
- DE-B- 1 225 927
- US-A- 4 973 432
- US-A- 6 141 804

## Beschreibung

Die Erfindung betrifft eine Vorrichtung für den Einsatz zur Verteilung von flüssigen und/oder gasförmigen Medien aus Schläuchen bzw. Rohren gemäß dem Oberbegriff des Anspruches 1.

Derartige Vorrichtungen sind aus dem Stand der Technik bekannt.

So wird beispielsweise eine gattungsgemäße Vorrichtung in der EP 1243835 B1 beschrieben. Diese Vorrichtung besteht aus einem Rohrstück und einem auf dem Rohrstück verstellbar angeordneten Spannring zum Anschluss einer Abzweigung an einen Schlauch, wobei das Rohrstück ein mit einem Kragen ausgebildetes Anschlussende aufweist, welches in eine mantelseitige Öffnung des Schlauches eingesetzt wird, wobei die Schlauchwandung zwischen dem Kragen und einer Kontaktfläche des Spannringes eingespannt wird und eine elastisch deformierbare Dichtung zwischen der Kontaktfläche und dem Kragen bildet. Der Spannring ist als topfförmiges Formklemmstück ausgebildet, dessen Aufnahmeraum eine den Kragen aufnehmende Tasche bildet und wobei der Schlauch durch Klemmung so in Form gezogen wird, dass der Kragen nicht in den Strömungsquerschnitt des Schlauches hinein vorsteht. Das Rohrstück weist ein Außengewinde auf und der Spannring wird durch eine mit dem Außengewinde in Eingriff stehende Spannmutter gegen die Schlauchwandung gespannt.

Nachteilig bei dieser Vorrichtung wird gesehen, dass bei der Montage an beispielsweise Sanitärwannen wie Whirlpools ein hoher zeitlicher sowie materieller bzw. maschineller Aufwand entsteht. Weiterhin können derartige Vorrichtungen nur vor Ort am konkreten Objekt montiert bzw. vorbereitet werden, so dass neben hohen Herstellungs- und Lagerhaltungskosten eine große Menge an Verschnitt entsteht.

Ein weiterer Nachteil der Vorrichtungen im Stand der Technik besteht darin, dass diese bedingt durch ihre hohe Einbautiefe beispielsweise beim Einsatz in Whirlpools dazu führen, dass eine kostenintensive, voluminöse und optisch nicht immer ansprechende Umhausung erforderlich ist.

Die EP 1389457 A1 beschreibt eine Vorrichtung für den Einsatz zur Verteilung von flüssigen und/oder gasförmigen Medien aus Schläuchen bzw. elastischen Rohren, umfassend ein Gehäuse mit einem ersten Durchgang zur Aufnahme eines ersten Mediums, einem zweiten Durchgang zur Aufnahme eines zweiten Mediums, eine Düsenaufnahme, die mit den Durchgängen in Wirkverbindung steht, wobei die Vorrichtung auf der die Düsenaufnahmekammer abgewandten Seite am ersten Durchgang und am zweiten Durchgang jeweils einen Fortsatz und eine den Schlauch bzw. das elastische Rohr aufnehmende Befestigungseinrichtung aufweist. Die EP 1389457 A1 beschreibt weiterhin eine gattungsgemäße Vorrichtung mit mindestens einem in den Durchgang einbringbaren, eine Öffnung aufweisenden Klemmelement. Die EP 1389457 A1 beschreibt in einem weiteren Ausführungsbeispiel (Figur 3) eine Vorrichtung, bei der in der Düsenaufnahme jeweils zylindrische Rohrstücke eingesetzt sind, die an ihrer von der Düsenaufnahme abgewandten Seite einen Bund aufweisen, der von ihrer Mantelfläche abragt. Zur Herstellung der Verbindung zwischen dem Schlauch bzw. dem elastischen Rohr wird in diese jeweils eine Öffnung eingebracht und über den Bund des zylindrischen Rohrstückes aufgebracht. Zur weiteren Fixierung wird ein Ringelement sowie ein Befestigungselement verwendet. Das Ringelement wird über die Außenkontur der Öffnung des Schlauches bzw. des elastischen Rohres aufgebracht und durch das Befestigungselement gegen diese verpresst. In dem Ausführungsbeispiel weist das den Schlauch aufnehmende Rohrstück einen Gewindebereich auf, über den das Befestigungselement das Ringelement gegen den Schlauch dichtend fixiert und wobei der Außendurchmesser des Ringelementes größer ist als der Durchmesser der bundförmigen Erweiterung.

Hier setzt die Erfindung ein, die sich die Aufgabe gestellt hat, die Nachteile des bekannten Standes der Technik zu überwinden und eine Vorrichtung für den Einsatz zur Verteilung von flüssigen und/oder gasförmigen Medien aus Schläuchen bzw. Rohren aufzuzeigen, die kostengünstig und wirtschaftlich herstellbar ist, die einen geringen Montageaufwand erfordert und die reparaturfreundlich austauschbar sowie einfach recycelbar ist.

Erfindungsgemäß wird die Aufgabe durch die Merkmale des Anspruches 1 gelöst.
Weitere vorteilhafte Ausgestaltungen sind in den Unteransprüchen beschrieben.

Die erfindungsgemäße Vorrichtung kann somit an jeder beliebigen Stelle, beispielsweise einer Sanitärwanne, die als sogenannter Whirlpool ausgeführt ist, eingesetzt werden, um flüssige bzw. gasförmige Medien in das Innere dieser Wanne durch eine in der Düsenaufnahmekammer angeordnete Whirlpooldüse zu transportieren und zu verteilen.

Die erfindungsgemäße Vorrichtung ist jedoch vorteilhafterweise auch so ausgebildet, dass sie zur Reparatur bzw. Sanierung derartiger Sanitärwannen problemlos, kostengünstig und wirtschaftlich einsetzbar ist.

Es liegt jedoch auch im Rahmen der Erfindung, bereits montierte Vorrichtungen aus dem Stand der Technik durch die erfindungsgemäße Vorrichtung zu ersetzen.

Die Montage der erfindungsgemäßen Vorrichtung kann vorteilhafterweise an den entsprechenden Positionen eines Whirlpools erfolgen, da beispielsweise der Schlauch von einer Rolle genau und ohne Verschnitt abgelängt und die erfindungsgemäße Vorrichtung entsprechend außen an der Wanne des Whirlpools montiert werden kann. Von der Innenseite der Wanne aus kann in die Düsenaufnahmekammer eine Whirlpooldüse eingesetzt werden, über die das flüssige und/oder gasförmige Medium in die Wanne verteilt wird.

Ein weiterer Vorteil der erfindungsgemäßen Vorrichtung wird darin gesehen, dass durch deren Aufbau eine wesentlich verringerte Montagezeit erforderlich ist, während gleichzeitig der Materialeinsatz und damit die Kosten der erfindungsgemäßen Vorrichtung insgesamt reduziert sind.

Ein weiterer Vorteil der erfindungsgemäßen Vorrichtung wird darin gesehen, dass die Wirkverbindung des Klemmelementes über die Mittel mit dem Durchgang kraftschlüssig ausgebildet ist, so dass auch nach längeren Betriebszeiten der erfindungsgemäßen Vorrichtung ein mögliches Nachdichten über das Betätigen des Klemmelementes möglich ist.

Dies erfolgt erfindungsgemäß dadurch, dass das Mittel als Gewinde ausgebildet ist, welches teilweise ohne Demontage einer Umhausung des Whirlpools durch die Düsenaufnahmekammer entsprechend betätigbar ist, bzw. als Rastverbindung ausgebildet ist, so dass eine geringe Montagezeit für die Montage der erfindungsgemäßen Vorrichtung erforderlich ist, bzw. als sogenannter Bajonettverschluss ausgebildet ist.

In einer weiteren vorteilhaften Ausgestaltung der erfindungsgemäßen Vorrichtung weist das Klemmelement eine Öffnung auf, die prismatisch, schlitzförmig, sternförmig, mehreckig, oval, kreisförmig oder dergleichen ausgebildet ist. Durch diese vorteilhafte Ausgestaltung, welche beispielsweise an der der Düsenaufnahmekammer gegenüberliegenden Seite des Klemmelementes angeordnet ist, ist die kraftschlüssige Verbindung des Klemmelementes über die Mittel mit dem Durchgang möglich, beispielsweise in Form von an sich bekannten Montagewerkzeugen, wie beispielsweise einen Innensechskant bzw. einen Kreuzschlitzschraubendreher.

In einer weiteren ebenfalls vorteilhaften Ausgestaltung ist die Wirkverbindung des Klemmelementes über die Mittel mit dem Durchgang stoffschlüssig ausgebildet, was beispielsweise als Klebe- bzw. Schweißverbindung möglich ist. Die erfindungsgemäße Vorrichtung ist somit ohne zusätzliche Dichtelemente, wie beispielsweise Dichtringe, einsetzbar. Somit ist die erfindungsgemäße Vorrichtung nicht nur wirtschaftlich günstiger herstellbar bzw. montierbar, sondern führt auch noch zu einem sicheren Betrieb, da mögliche Leckagestellen gemäß dem Stand der Technik nicht mehr existieren.

Ein weiterer Vorteil der erfindungsgemäßen Vorrichtung wird darin gesehen, dass das Klemmelement auf seiner dem Mittel gegenüberliegenden Seite wenigstens einen Kragen aufweist, so dass beim Fixieren des Klemmelementes, welches beispielsweise in eine Öffnung eines Schlauches eingebracht worden ist unter Berücksichtigung der Elastizität des Schlauches bzw. des Rohres, eine definierte Abdichtung möglich ist.

Weiterhin ist es bei der erfindungsgemäßen Vorrichtung möglich, auch über die Düsenaufnahmekammer zu einem späteren Zeitpunkt eine Nachjustierung bzw. Nachdichtung vorzunehmen, da die Öffnung des Klemmelementes der Öffnung der Düsenaufnahmekammer direkt gegenüberliegend angeordnet ist. Der am Klemmelement angeordnete Kragen kann dabei prismatisch, schlitzförmig, sternförmig, mehreckig, oval, kreisförmig oder dergleichen ausgebildet sein. Dies ist abhängig von dem jeweils zu fixierenden Material des Schlauches bzw. Rohres.

In einer weiteren ebenfalls vorteilhaften Ausgestaltung der erfindungsgemäßen Vorrichtung weist das Gehäuse ein vom Durchgang beabstandet angeordnetes Fixierelement auf. Dieses Fixierelement, welches vorteilhafterweise als umlaufender Steg ausgebildet sein kann, führt beim Verpressen des Schlauches bzw. Rohres gegen das Gehäuse zu einer entsprechenden Fixierung und Abdichtung, ohne dass zusätzliche Befestigungselemente oder Dichtungselemente erforderlich sind.

Es liegt jedoch auch im Rahmen der Erfindung, dass das Fixierelement als partiell beispielsweise kreisförmig angeordneter Steg ausgebildet ist.

In einer ebenfalls vorteilhaften Ausgestaltung der erfindungsgemäßen Vorrichtung weist das Klemmelement an seiner dem Durchgang zugewandten Seite wenigstens ein Fixierelement auf, welches eine zusätzliche Fixierung für den Schlauch bzw. das Rohr beinhaltet. Das Fixierelement kann dabei beispielsweise am Kragen des Klemmelementes angeordnet und als umlaufender oder partiell angeordneter Steg ausgebildet sein.

Die erfindungsgemäße Vorrichtung ist in einem weiteren vorteilhaften Ausführungsbeispiel so ausgebildet, dass der erste Durchgang zum zweiten Durchgang in einem Winkel von ca. 10° bis 90°, vorteilhafterweise in einem Winkel von 10° bis 70° oder 75° bis 90° oder 35° bis 55° angeordnet ist. Durch diese vorteilhafte Ausführungsform kann die erfindungsgemäße Vorrichtung in einer sehr kompakten kleinen und somit kostengünstigen Bauart zur Verfügung gestellt werden, welche zusätzlich noch eine reduzierte Montagehöhe in zwei Achsen ermöglicht, wodurch beispielsweise bei einem Whirlpool die diesen umgebende Umhausung in einer geringeren Bautiefe ausführbar ist.

Weiterhin ist durch diese vorteilhafte Ausgestaltung der erfindungsgemäßen Vorrichtung eine seitliche bzw. auch eine hängende Montage an einem beispielsweise Whirlpool möglich.

Es liegt auch im Rahmen der Erfindung, dass dem in einem etwa rechten Winkel zum ersten Durchgang angeordneten zweiten Durchgang gegenüberliegend am Gehäuse ein dritter Durchgang für die Zuführung eines weiteren Mediums anbringbar ist, der die gleichen vorteilhaften Ausgestaltungen aufweist wie der zweite Durchgang.

Es hat sich weiterhin gezeigt, dass zur zusätzlichen Fixierung des Schlauchs bzw. des Rohrs am Gehäuse es von Vorteil ist, wenn das Gehäuse mit wenigstens einem Befestigungsmittel mit einem Aufnahmeelement in Wirkverbindung steht. Somit kann auch die Belastung auf die zum Befestigen des Schlauches bzw. des Rohres mit dem Klemmelement notwendige Öffnung im Schlauch bzw. Rohr reduziert werden, so dass die Entstehung einer Leckage wirkungsvoll verhindert werden kann.

In einer weiteren vorteilhaften Ausgestaltung der erfindungsgemäßen Vorrichtung ist die Wirkverbindung des Aufnahmeelementes über das Befestigungsmittel mit dem Durchgang kraftschlüssig ausgebildet, was die Montagezeiten wiederum positiv beeinflusst.

In diesem Zusammenhang wurde erkannt, dass das Befestigungsmittel der erfindungsgemäßen Vorrichtung vorteilhaft als Schelle ausgebildet sein kann, die geringe Anschaffungskosten aufweist und deren Montage schnell und einfach möglich ist.

Es liegt jedoch auch im Rahmen der Erfindung, dass das Befestigungsmittel als sogenannter Kabelbinder ausgebildet ist, welcher beispielsweise aus einem polymeren Werkstoff hergestellt ist, so dass die erfindungsgemäße Vorrichtung als komplett korrosionsfrei aus einem polymeren Werkstoff hergestellt sein kann.

In einer weiteren vorteilhaften Ausgestaltung der erfindungsgemäßen Vorrichtung kann das Befestigungsmittel auch als Draht, Faden oder dergleichen ausgebildet sein, welcher entsprechend den Materialien des Schlauches, des Rohres bzw. des Gehäuses dimensionierbar ist.

In einer weiteren vorteilhaften Ausgestaltung ist die Wirkverbindung des Aufnahmeelementes über das Befestigungsmittel mit dem Durchgang stoffschlüssig ausgebildet, was beispielsweise durch an sich bekannte Klebeverbindungen bzw. Schweißverbindungen möglich ist. Die erfindungsgemäße Vorrichtung ist somit also nicht nur wirtschaftlich günstiger herstellbar bzw. montierbar, sondern führt auch noch zu einem insgesamt sichereren Betrieb, beispielsweise bei einem Whirlpool, da mögliche Leckagestellen, die aus dem Stand der Technik bekannt sind, nicht mehr existieren.

In einer weiteren vorteilhaften Ausgestaltung weist das Aufnahmeelement eine dem Schlauch bzw. dem Rohr entsprechende Kontur auf, so dass möglichst ein flächiges Anliegen des Schlauches bzw. Rohres am Aufnahmeelement erreicht wird. Durch diese Ausgestaltung wird eine gleichmäßige Krafteinleitung über das Befestigungsmittel in das Gehäuse gewährleistet.

Es hat sich gezeigt, dass das Aufnahmemittel stoffschlüssig mit dem Gehäuse verbunden sein kann, so dass die Kraftübertragung einfach realisiert werden kann.

In einer weiteren vorteilhaften Ausgestaltung ist das Aufnahmeelement kraftschlüssig mit dem Gehäuse verbindbar. Dies kann vorteilhafterweise dazu genutzt werden, das Gehäuse der erfindungsgemäßen Vorrichtung für mehrere unterschiedliche Querschnitte von Schläuchen bzw. Rohren zu verwenden, die jeweils über ein entsprechend dimensioniertes Aufnahmeelement, welches am Gehäuse anbringbar ist, abdichtend mit diesem verbunden werden können.

Das Aufnahmeelement ist vorteilhafterweise auf der dem Durchgang gegenüberliegenden Seite des Gehäuses angeordnet, so dass die erfindungsgemäße Vorrichtung in einer kompakten und Platz sparenden Bauart zur Verfügung gestellt werden kann.

Die erfindungsgemäße Vorrichtung ist vorteilhafterweise so ausgebildet, dass das Aufnahmeelement an seiner dem Schlauch bzw. dem Rohr gegenüberliegend angeordneten Seite wenigstens ein Halteelement aufweist. Durch dieses Halteelement ist es schnell und sicher möglich, beispielsweise das als Schelle bzw. Kabelbinder ausgebildete Mittel exakt an der erforderlichen Stelle zu positionieren und eine abdichtende Verbindung zwischen dem Schlauch bzw. dem Rohr und dem Gehäuse der erfindungsgemäßen Vorrichtung herzustellen.

Es hat sich vorteilhafterweise herausgestellt, dass das Verhältnis der Breite des Aufnahmeelementes zur Breite des Durchganges wenigstens zwei beträgt, so dass ein optimales Kosten-Nutzen-Verhältnis bezüglich der Herstellungskosten sowie der erforderlichen Fläche für eine abdichtende Verbindung möglich ist.

Es hat sich weiterhin als sehr vorteilhaft erwiesen, dass das Verhältnis der Länge des Aufnahmeelementes zur Länge des Durchganges wenigstens vier beträgt, ohne dass die Stabilität bzw. Festigkeit der abdichtenden Verbindung im Dauerbetrieb, beispielsweise bei einem Whirlpool, negativ beeinflusst ist.

Die Erfindung soll nun an einem diesen nicht einschränkenden Ausführungsbeispiel näher beschrieben werden. Es zeigt:
- Figur 1 -: Schnittdarstellung einer erfindungsgemäßen Vorrichtung
- Figur 2 -: Perspektivische Darstellung einer Vorrichtung
- Figur 3 -: Schnittdarstellung einer erfindungsgemäßen Vorrichtung

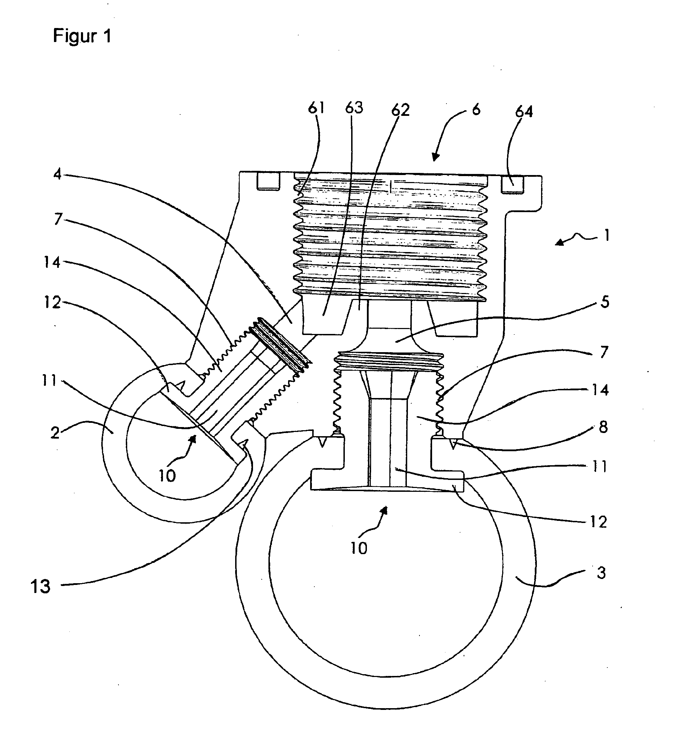

In Figur 1 ist eine erfindungsgemäße Vorrichtung für den Einsatz zur Verteilung von flüssigen und/oder gasförmigen Medien aus Schläuchen (2) bzw. Rohren (3) dargestellt. Die erfindungsgemäße Vorrichtung umfasst einen Schlauch (2) bzw. ein Rohr (3) und ein Gehäuse (1) mit einem ersten Durchgang (4) zur Aufnahme eines ersten Mediums aus einem Schlauch (2), mit einem zweiten Durchgang (5) zur Aufnahme eines zweiten Mediums aus einem Rohr (3), mit einer Düsenaufnahmekammer (6), die mit den Durchgängen (4, 5) in Verbindung steht.

Die Düsenaufnahmekammer (6) ist in diesem Ausführungsbeispiel rund ausgebildet und weist in ihrem Inneren ein Gewinde (61) zur Befestigung einer nicht dargestellten Düse auf. Am oberen Rand der Düsenaufnahmekammer (6) ist eine Öffnung (64) umlaufend eingebracht, in die ein hier nicht dargestelltes Dichtungselement einbringbar ist. Die Düsenaufnahmekammer (6) dient zum Mischen der flüssigen und/oder gasförmigen Medien, die über die mindestens zwei Durchgänge (4, 5) in die Düsenaufnahmekammer (6) aus dem Schlauch (2) bzw. dem Rohr (3) strömen. In diesem Ausführungsbeispiel wird im Schlauch (2) Luft geleitet und im Rohr (3) Wasser. Diese beiden unterschiedlichen Medien werden in der Düsenaufnahmekammer (6) gemischt und über die nicht dargestellte Düse z. B. in einen Whirlpool abgegeben.

Der zweite Durchgang (5) des Gehäuses (1) ist von einem umlaufenden Kragen (62) umgeben, so dass zwischen der äußeren Wand des Kragens (62) und der Innenwand der Düsenaufnahmekammer (6) ein Ringspalt (63) ausgebildet ist.

An der der Düsenaufnahmekammer (6) gegenüberliegenden Seite des Gehäuses (1) ist ein Klemmelement (10) angeordnet, welches über Mittel (7) mit dem zweiten Durchgang (5) des Gehäuses (1) in Wirkverbindung steht. Die Mittel (7) sind in diesem Ausführungsbeispiel als Gewinde ausgebildet.

Das Klemmelement (10) ist in diesem Ausführungsbeispiel rund ausgebildet und weist in seinem Inneren eine zentrisch eingebrachte Öffnung (11) auf. Die Öffnung (11) des Klemmelementes (10) ist in diesem Ausführungsbeispiel prismatisch ausgebildet. Das Klemmelement (10) weist an seiner dem Mittel (7) gegenüberliegenden äußeren Seite einen Kragen (12) auf, der einen größeren Außendurchmesser aufweist als die Basis (14) des Klemmelementes (10).

An der dem Kragen (12) des Klemmelementes (10) gegenüberliegenden Seite des Gehäuses (1) sind Fixierelemente (8) angeordnet, welche in diesem Ausführungsbeispiel als umlaufender etwa dreieckförmiger Steg ausgebildet sind. Zwischen dem Kragen (12) des Klemmelementes (10) und der Unterseite des Gehäuses (1) ist ein Rohr (3) dargestellt, welches über das in dem zweiten Durchgang (5) eingebrachte Klemmelement (10) flüssigkeitsdicht mit dem Gehäuse (1) verbunden ist. Das Klemmelement (10) ist in diesem Ausführungsbeispiel kraftschlüssig eingebracht.

Der zweite Durchgang (5) ist in diesem Ausführungsbeispiel konzentrisch in der Düsenaufnahmekammer (6) des Gehäuses (1) angebracht, während der erste Durchgang (4), welcher in diesem Ausführungsbeispiel an der Innenwand der Düsenaufnahmekammer (6) angeordnet ist, etwa in einem Winkel von 45° zum zweiten Durchgang (5) angeordnet ist.

Im ersten Durchgang (4) des Gehäuses (1) ist ebenfalls ein Klemmelement (10) angeordnet, welches über Mittel (7) kraftschlüssig mit dem ersten Durchgang (4) verbunden ist. Die Mittel (7) sind in diesem Ausführungsbeispiel als Gewinde ausgebildet.

Das Klemmelement (10) weist an seiner dem Mittel (7) gegenüberliegenden äußeren Seite einen Kragen (12) auf, welcher in seinen Außenabmessungen größer ausgebildet ist als die mit dem Mittel (7) versehene Basis (14) des Klemmelementes (10), Im Zentrum des Klemmelementes (10) ist eine Öffnung (11) angeordnet, welche in diesem Ausführungsbeispiel durchgängig sechseckig ausgebildet ist. Somit ist es mit einem einfachen Inbusschlüssel möglich, das Klemmelement (10) über die sechseckig ausgebildete Öffnung (11) von der Düsenaufnahmekammer (6) zu fixieren bzw. zu einem späteren Zeitpunkt nachzufixieren.

An der Unterseite des Kragens (12) des Klemmelementes (10) sind gegenüber dem Gehäuse (1) Fixierelemente (13) angeordnet, welche in diesem Ausführungsbeispiel als etwa dreieckförmiger partieller Steg ausgebildet sind, so dass der Schlauch (2) über Fixierelemente (13) und den Kragen (12) flüssigkeitsdicht über die Mittel (7) des Klemmelementes (10) mit dem ersten Durchgang (4) des Gehäuses (1) verbunden ist.

Es liegt jedoch auch im Rahmen der Erfindung, dass beispielsweise am Kragen (12) oder der dem Kragen (12) des Klemmelementes (10) gegenüberliegenden Seite des Gehäuses (1) ein zusätzlicher Klebstoff anbringbar ist.

Die erfindungsgemäße Vorrichtung lässt sich somit ohne die Verwendung zusätzlicher Befestigungs- und Klemmelemente montieren. Bei der Montage ist es erforderlich, dass in den Schlauch (2) bzw. das Rohr (3) eine Öffnung einzubringen ist, durch die vom Inneren des Schlauches (2) bzw. des Rohres (3) das Klemmelement (10) durchzuführen ist. Der Schlauch (2) bzw. das Rohr (3) mit dem in der Öffnung integrierten Klemmelement (10) ist nun an den jeweils ersten Durchgang (4) bzw. zweiten Durchgang (5) gegenüberliegend anzuordnen und kann dann über in die Düsenaufnahmekammer (6) des Gehäuses eingebrachte Montagewerkzeuge, die in die jeweils dimensionierte Öffnung (11) des Klemmelementes (10) einbringbar sind, flüssigkeitsdicht mit dem Gehäuse (1) verbunden werden. Hierbei ist unter Berücksichtigung der Elastizität des Schlauches (2) bzw. des Rohres (3) eine entsprechende Verpressung des Schlauches (2) bzw. des Rohres (3) über den Kragen (12) des Klemmelementes (10) mit dem jeweils gegenüberliegenden Teil des Gehäuses (1) erreichbar, ohne dass zusätzliche Dicht- und Fixierelemente erforderlich sind.

Die so zusammengefügte Vorrichtung wird z. B. an einem Whirlpool auf der Außenseite der Wanne an vorgesehenen Öffnungen positioniert. Dabei kann es hilfreich sein, eine Vorfixierung mit Hilfe einer Schelle oder dergleichen oder mittels eines Klebers, insbesondere Silikon, vorzunehmen. Im Anschluss daran, wird von der Innenseite der Wanne die Düse über das Gewinde (61) in das Gehäuse (1) eingebracht, so dass eine fluiddichte Verbindung entsteht. Die Abdichtung zwischen der Außenseite der Wanne und dem Gehäuse (1) wird über ein nicht dargestelltes, in die Öffnung (64) einbringbares, Dichtelement gewährleistet.

Weiterhin ist es vorteilhaft möglich, bei späteren Überprüfungen über die Düsenaufnahmekammer (6) des Gehäuses (1) die Klemmelemente (10) entsprechend nachzufixieren bzw. nachzudichten, ohne dass die kompletten Verkleidungen an der Außenseite des beispielsweise Whirlpools, welche im Allgemeinen an der der Düsenaufnahmekammer (6) des Gehäuses (1) gegenüberliegenden Seite des Schlauches (2) bzw. des Rohres (3) anliegen, abzumontieren.

Erfindungsgemäß sind die Mittel (7) beispielsweise als Rastverbindungen bzw. in Form eines Bajonettverschlusses ausgebildet, so dass eine schnelle, kostengünstige und effiziente Montage der erfindungsgemäßen Vorrichtung für den Einsatz zur Verteilung von flüssigen und/oder gasförmigen Medien aus Schläuchen (2) bzw. Rohren (3) möglich ist.

Das Gehäuse (1) kann dabei sehr kompakt dimensioniert werden, was zu einer extrem reduzierten Montagehöhe der erfindungsgemäßen Vorrichtung führt, insbesondere wenn der erste Durchgang (4) zum zweiten Durchgang (5) in einem Winkel von etwa 10° bis 70°, vorteilhafterweise 10° bis 35°, angeordnet ist.

Es liegt jedoch auch im Rahmen der Erfindung, dass das Gehäuse (1) der erfindungsgemäßen Vorrichtung noch einen dritten bzw. vierten hier nicht dargestellten Durchgang aufweist, welcher ebenfalls in einem Winkel von ca. 10° bis 90°, vorteilhafterweise in einem Winkel von 10° bis 70° oder 75° bis 90° oder 35° bis 55°, vom ersten Durchgang (4) bzw. vom zweiten Durchgang (5) angeordnet ist.

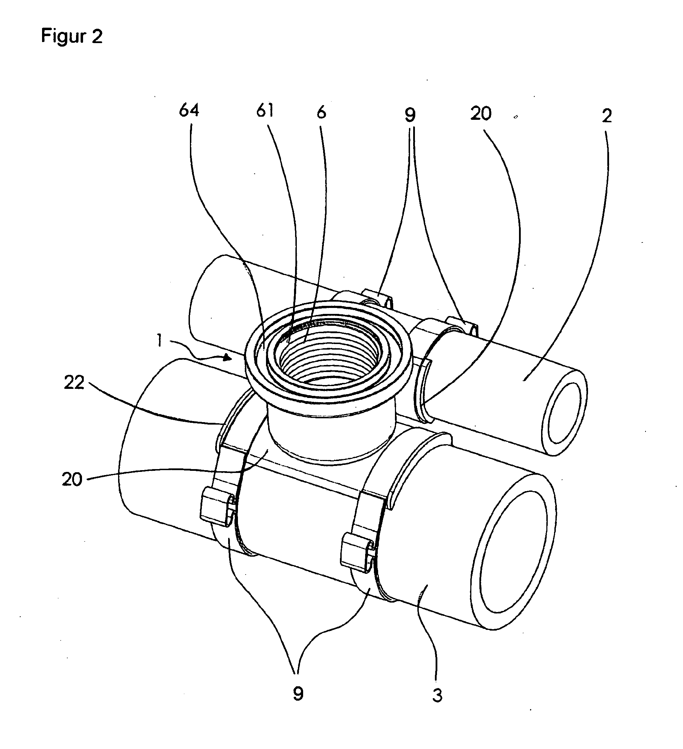

In Figur 2 ist eine perspektivische Darstellung einer weiteren Vorrichtung für den Einsatz zur Verteilung von flüssigen und/oder gasförmigen Medien aus Schläuchen (2) bzw. Rohren (3) dargestellt. Die Vorrichtung umfasst einen Schlauch (2) bzw. ein Rohr (3) und ein Gehäuse (1) mit einem nicht sichtbaren ersten Durchgang (4) und einem nicht sichtbaren zweiten Durchgang (5). Das Gehäuse (1) weist eine Düsenaufnahmekammer (6) auf, die mit den nicht dargestellten Durchgängen (4, 5) in Wirkverbindung steht. Die Düsenaufnahmekammer (6) ist in diesem Ausführungsbeispiel rund ausgeführt und weist in ihrem Inneren ein Gewinde (61) auf. Am oberen Rand der Düsendaufnahmekammer (6) ist eine Öffnung (64) eingebracht, in die ein hier nicht dargestelltes Dichtungselement einbringbar ist.

An der der Düsenaufnahmekammer (6) gegenüberliegenden Seite des Gehäuses (1) ist ein Aufnahmeelement (20) angeordnet. Dieses Aufnahmeelement (20) ist in diesem Ausführungsbeispiel einstückig an der Düsenaufnahmekammer (6) angeordnet und in seinen Außenabmessungen etwa viereckig ausgebildet. An dem Aufnahmeelement (20) ist in diesem Ausführungsbeispiel ein Rohr (3) angeordnet, welches über Befestigungsmittel (9) mit dem Aufnahmeelement (20) in Wirkverbindung steht.

Parallel zum Rohr (3) ist an der Vorrichtung ein Schlauch (2) dargestellt, welcher ebenfalls an einem Aufnahmeelement (20) über Befestigungsmittel (9) fixiert ist. Das dem Rohr (3) gegenüberliegend angeordnete Aufnahmeelement (20) weist in diesem Ausführungsbeispiel an seinen äußeren Kanten ein Halteelement (22) auf, welches bei der Montage verhindern soll, dass das Befestigungsmittel (9) über das Aufnahmeelement (20) hinweg auf das Rohr (3) abgleiten kann. Das Halteelement (22) ist in diesem Ausführungsbeispiel als Steg ausgebildet und über die gesamte Breite des Aufnahmeelementes (20) einstückig mit diesem verbunden.
Das Halteelement (22) kann sowohl rechts als auch links neben dem Befestigungsmittel (9) angeordnet sein, um dies insbesondere bei der Montage zu führen und die Montagezeit zu reduzieren.

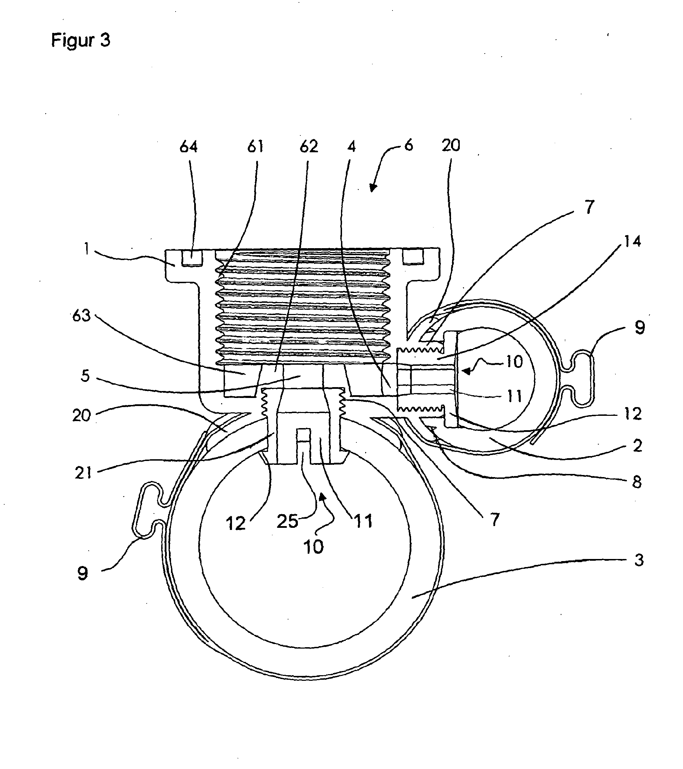

In Figur 3 ist eine Schnittdarstellung einer erfindungsgemäßen Vorrichtung für den Einsatz zur Verteilung von flüssigen und/oder gasförmigen Medien aus Schläuchen (2) bzw. Rohren (3) dargestellt.

Die erfindungsgemäße Vorrichtung umfasst einen Schlauch (2) bzw. ein Rohr (3) und ein Gehäuse (1) mit einem ersten Durchgang (4) zur Aufnahme eines ersten Mediums aus einem Schlauch (2), mit einem zweiten Durchgang (5) zur Aufnahme eines zweiten Mediums aus einem Rohr (3) mit einer Düsenaufnahmekammer (6), die mit den Durchgängen (4, 5) in Verbindung steht.

Die Düsenaufnahmekammer (6) ist in diesem Ausführungsbeispiel in ihrem Querschnitt rund ausgelegt und weist in ihrem Inneren ein Gewinde (61) auf. Am oberen Rand der Düsenaufnahmekammer (6) ist eine Öffnung (64) eingebracht, in die ein hier nicht dargestelltes Dichtungselement einbringbar ist. Der zweite Durchgang (5) des Gehäuses (1) ist von einem umlaufenden Kragen (62) umgeben, so dass zwischen der äußeren Wand des Kragens (62) und der Innenwand der Düsenaufnahmekammer (6) ein Ringspalt (63) ausgebildet ist. An der der Düsenaufnahmekammer (6) gegenüberliegenden Seite des Gehäuses (1) ist ein Aufnahmeelement (20) angeordnet, welches in diesem Ausführungsbeispiel einstückig am Gehäuse (1) angeordnet ist. Das Aufnahmeelement (20) ist in seiner Fläche rechteckig ausgebildet und im Querschnitt der Kontur des daran angeordneten Rohres (3) angepasst.

An der der Düsenaufnahmekammer (6) gegenüberliegend angeordneten Seite ist ein Klemmelement (10) angeordnet, welches mit seiner Öffnung (11) konzentrisch zum zweiten Durchgang (5) ausgerichtet ist. Das Klemmelement (10) ist in diesem Ausführungsbeispiel rund ausgebildet und ragt in eine Öffnung des Rohres (3) hinein.

Das Rohr (3) liegt mit seiner Außenkontur bündig am Aufnahmeelement (20) an und wird über die Befestigungsmittel (9), welche als Schellen ausgebildet sind, am Gehäuse (1) fixiert. Das Klemmelement (10) weist in diesem Ausführungsbeispiel eine vom Aufnahmeelement (20) wegragende Höhe auf, die geringfügig größer ist als die Wandstärke des Rohres (3). Dadurch kann eine abdichtende und flüssigkeitsdichte Verbindung des Rohres (3) mit der Vorrichtung hergestellt werden.

Das Klemmelement (10), welches mit seiner Öffnung (11) konzentrisch zum zweiten Durchgang (5) angeordnet ist, weist in diesem Ausführungsbeispiel einen, dem Aufnahmeelement (20) gegenüberliegenden Kragen (12) auf, der die im Rohr (3) eingebrachte Öffnung hintergreift und so das Rohr (3) bereits vor der Montage und Fixierung über die Befestigungsmittel (9) fixiert und abdichtet. Um die Belastung auf die im Rohr (3) eingebrachte Öffnung zu minimieren, sind die Befestigungsmittel (9) im Anschluss an die Fixierung über das Klemmelement (10) anzubringen.

Am Gehäuse (1) ist in etwa einem rechten Winkel zum zweiten Durchgang (5) der erste Durchgang (4) angeordnet. Der erste Durchgang (4) ist mit dem Ringspalt (63) verbunden und weist an seiner der Düsenaufnahmekammer (6) gegenüberliegenden Seite das Aufnahmeelement (20) auf. Das Aufnahmeelement (20) ist in diesem Ausführungsbeispiel einstückig mit dem Gehäuse (1) verbunden und weist an seiner dem Schlauch (2) gegenüberliegenden Seite ein Fixierelement (8) auf, welches in diesem Ausführungsbeispiel als umlaufender etwa dreieckförmiger Steg ausgebildet ist.

Der erste Durchgang (4) ist in diesem Ausführungsbeispiel als in das Aufnahmeelement (20) hineinragendes Klemmelement (10) ausgebildet und weist einen runden Querschnitt auf. Am Aufnahmeelement (20) ist der Schlauch (2) angeordnet, welcher an seiner dem ersten Durchgang (4) zugewandten Seite eine Öffnung aufweist, durch die das Klemmelement (10) in das Innere des Schlauches (2) hineinragt.

Das Aufnahmeelement (20) weist in seinem Querschnitt einen etwa der Kontur des Schlauches (2) angepassten Querschnitt auf, wobei über Befestigungsmittel (9) der Schlauch (2) am Aufnahmeelement (20) angeordnet ist und wobei das am Aufnahmeelement (20) angeordnete Fixierelement (8) den Schlauch (2) vor bzw. während der Montage des Befestigungsmittel (9) positioniert.

An der der Düsenaufnahmekammer (6) gegenüberliegenden Seite des Gehäuses (1) ist dem ersten Durchgang (4) gegenüberliegend ein Klemmelement (10) angeordnet, welches über Mittel (7) mit dem Durchgang (4) des Gehäuses (1) in Wirkverbindung steht. Die Mittel (7) sind in diesem Ausführungsbeispiel als Gewinde ausgebildet, so dass das Klemmelement (10) mit dem Gehäuse (1) in Wirkverbindung steht.

Das Klemmelement (10) ist in diesem Ausführungsbeispiel rund ausgebildet und weist in seinem Innern eine zentrisch eingebrachte Öffnung (11) auf. Die Öffnung (11) des Klemmelementes (10) ist in diesem Ausführungsbeispiel sechseckig ausgebildet. Das Klemmelement (10) weist an seiner dem Mittel (7) gegenüberliegenden äußeren Seite einen Kragen (12) auf, der einen größeren Außendurchmesser aufweist als die Basis (14) des Klemmelementes (10). Zwischen dem Kragen (12) des Klemmelementes (10) und dem Aufnahmeelement (20) des Gehäuses ist ein Schlauch (2) dargestellt, welcher über das im ersten Durchgang (4) eingebrachte Klemmelement (10) flüssigkeitsdicht mit dem Gehäuse (1) verbunden ist.

## Patentansprüche

1. Vorrichtung für den Einsatz zur Verteilung von flüssigen und/oder gasförmigen Medien umfassend einen Schlauch (2) bzw. ein Rohr (3) und ein Gehäuse (1) mit einem ersten Durchgang (4) zur Aufnahme eines ersten Mediums, mit einem zweiten Durchgang (5) zur Aufnahme eines zweiten Mediums, mit einer Düsenaufnahmekammer (6), die mit den Durchgängen (4, 5) in Verbindung steht und mindestens einem in den Durchgang (4, 5) einbringbaren, eine Öffnung (11) aufweisenden Klemmelement (10), **dadurch gekennzeichnet, dass** das Klemmelement (10) über Mittel (7) mit dem Durchgang (4, 5) kraftschlüssig, als Gewinde, als Rastverbindung, als Bajonettverschluss oder dgl. so in Wirkverbindung steht dass der Schlauch (2) bzw. das Rohr (3) verpresst am Gehäuse (1) und dadurch ditchend angeordnet ist.

2. Vorrichtung nach Anspruch 1, **dadurch gekennzeichnet, dass** die Öffnung (11) des Klemmelementes (10) prismatisch, schlitzförmig, sternförmig, mehreckig, oval, kreisförmig oder dergleichen ausgebildet ist.

3. Vorrichtung nach einem der vorhergehenden Ansprüche, **dadurch gekennzeichnet, dass** die Öffnung (11) des Klemmelementes (10) prismatische, schlitzförmige, sternförmige, mehreckige, ovale, kreisförmige oder dgl. Ausnehmungen aufweist.

4. Vorrichtung nach Anspruch 1, **dadurch gekennzeichnet, dass** die Wirkverbindung des Klemmelementes (10) über die Mittel (7) mit dem Durchgang (4, 5) stoffschlüssig, insbesondere als Klebeverbindung, als Schweißverbindung oder dgl. ausgebildet ist.

5. Vorrichtung nach einem der vorhergehenden Ansprüche, **dadurch gekennzeichnet, dass** das Klemmelement (10) auf seiner dem Mittel (7) gegenüberliegenden Seite wenigstens einen Kragen (12), insbesondere einen prismatisch, sternförmig, mehreckig, oval, kreisförmig oder dergl. ausgebildeten Kragen (12), aufweist.

6. Vorrichtung nach einem der vorhergehenden Ansprüche, **dadurch gekennzeichnet, dass** das Gehäuse (1) ein vom Durchgang (4, 5) beabstandet angeordnetes Fixierelement (8) aufweist.

7. Vorrichtung nach Anspruch 6, **dadurch gekennzeichnet, dass** das Fixierelement (8) als umlaufender oder partiell angeordneter Steg ausgebildet ist.

8. Vorrichtung nach einem der vorhergehenden Ansprüche, **dadurch gekennzeichnet, dass** das Klemmelement (10) an seiner dem Durchgang (4, 5) zugewandten Seite wenigstens ein Fixierelement (13) aufweist.

9. Vorrichtung nach Anspruch 8, **dadurch gekennzeichnet, dass** das Fixierelement (13) als umlaufender Steg oder partiell angeordneter ausgebildet ist.

10. Vorrichtung nach einem der vorhergehenden Ansprüche, **dadurch gekennzeichnet, dass** der erste Durchgang (4) zum zweiten Durchgang (5) in einem Winkel von etwa 10° bis 90°, vorteilhafterweise in einem Winkel von 10° bis 70° oder 75° bis 90° oder 35° bis 55°, angeordnet ist.

11. Vorrichtung nach einem der vorhergehenden Ansprüche, **dadurch gekennzeichnet, dass** das Gehäuse (1) wenigstens ein Aufnahmeelement (20) aufweist, welches mit wenigstens einem Befestigungsmittel (9) so in Wirkverbindung steht, dass der Schlauch (2) bzw. das Rohr (3) am Gehäuse (1) zusätzlich fixiert ist.

12. Vorrichtung nach Anspruch 11, **dadurch gekennzeichnet, dass** die Wirkverbindung des Aufnahmeelementes (20) über das Befestigungsmittel (9) mit dem Gehäuse (1) kraftschlüssig, insbesondere als Schelle, als an sich bekannte Kabelbinder, als Draht, als Faden oder dergl., ausgebildet ist.

13. Vorrichtung nach Anspruch 11, **dadurch gekennzeichnet, dass** die Wirkverbindung des Aufnahmeelementes (20) über das Befestigungsmittel (9) mit dem Gehäuse (1) stoffschlüssig, insbesondere als Klebeverbindung oder als Schweißverbindung, ausgebildet ist.

14. Vorrichtung nach einem der vorhergehenden Ansprüche, **dadurch gekennzeichnet, dass** das Aufnahmeelement (20) eine dem Schlauch (2) bzw. dem Rohr (3) entsprechende Kontur aufweist.

15. Vorrichtung nach einem der vorhergehenden Ansprüche, **dadurch gekennzeichnet, dass** das Aufnahmeelement (20) stoffschlüssig mit dem Gehäuse (1) verbunden ist.

16. Vorrichtung nach einem der vorhergehenden Ansprüche, **dadurch gekennzeichnet, dass** das Aufnahmeelement (20) kraftschlüssig mit dem Gehäuse (1) verbindbar ist.

17. Vorrichtung nach einem der vorhergehenden Ansprüche, **dadurch gekennzeichnet, dass** das Aufnahmeelement (20) auf der dem Durchgang (4, 5) gegenüberliegenden Seite des Gehäuses (1) angeordnet ist.

18. Vorrichtung nach einem der vorhergehenden Ansprüche 11 bis 17, **dadurch gekennzeichnet, dass** das Aufnahmeelement (20) an seiner dem Schlauch (2) bzw. dem Rohr (3) gegenüberliegend angeordneten Seite wenigstens ein Halteelement (22) aufweist.

19. Vorrichtung nach Anspruch 18, **dadurch gekennzeichnet, dass** das Verhältnis der Breite des Aufnahmeelementes (20) zur Breite des Durchganges (4, 5) wenigstens 2 beträgt.

20. Vorrichtung nach Anspruch 18, **dadurch gekennzeichnet, dass** das Verhältnis der Länge des Aufnahmeelementes (20) zur Länge des Durchgangs (4, 5) wenigstens 4 beträgt.

## Claims

1. Device for dispensing liquid and/or gaseous media, from a flexible tube (2) or a pipe (3), and a housing (1) with a first passage (4) for receiving a first medium, with a second passage (5) for receiving a second medium, with a nozzle-holding chamber (6) which is connected to the passages (4, 5) and with at least one clamping element (10) which can be placed into the passage (4, 5) and has an opening (11), **characterized in that** the clamping element (10) is operatively connected to the passage (4, 5) in a frictional manner via means (7) in the form of a thread, a latching connection, a bayonet fastening or the like in such a manner that the flexible tube (2) or the pipe (3) is arranged compressed on the housing (1) and, as a result, in a sealing manner.

2. Device according to Claim 1, **characterized in that** the opening (11) in the clamping element (10) is of prismatic, slot-shaped, star-shaped, polygonal, oval or circular design or the like.

3. Device according to either of the preceding claims, **characterized in that** the opening (11) in the clamping element (10) has prismatic, slot-shaped, star-shaped, polygonal, oval or circular recesses or the like.

4. Device according to Claim 1, **characterized in that** the operative connection of the clamping element (10) to the passage (4, 5) via the means (7) is designed with a cohesive material joint, in particular in the form of an adhesive connection, a welded connection or the like.

5. Device according to one of the preceding claims, **characterized in that** the side of the clamping element (10) opposite the means (7) has at least one collar (12), in particular a collar (12) of prismatic, star-shaped, polygonal, oval or circular design or the like.

6. Device according to one of the preceding claims, **characterized in that** the housing (1) has a fixing element (8) which is spaced apart from the passage (4, 5).

7. Device according to Claim 6, **characterized in that** the fixing element (8) is designed as an encircling or partially arranged web.

8. Device according to one of the preceding claims, **characterized in that** that side of the clamping element (10) which faces the passage (4, 5) has at least one fixing element (13).

9. Device according to Claim 8, **characterized in that** the fixing element (13) is designed as an encircling web or partially arranged web.

10. Device according to one of the preceding claims, **characterized in that** the first passage (4) is arranged at an angle of approximately 10° to 90°, advantageously at an angle of 10° to 70° or 75° to 90° or 35° to 55°, to the second passage (5).

11. Device according to one of the preceding claims, **characterized in that** the housing (1) has at least one holding element (20) which is operatively connected to at least one fastening means (9) in such a manner that the flexible tube (2) or the pipe (3) is additionally fixed on the housing (1).

12. Device according to Claim 11, **characterized in that** the operative connection of the holding element (20) to the housing (1) via the fastening means (9) is designed in a frictional manner, in particular in the form of a clip, cable ties which are known per se, a wire, threads or the like.

13. Device according to Claim 11, **characterized in that** the operative connection of the holding element (20) to the housing (1) via the fastening means (9) is designed as a cohesive material joint, in particular in the form of an adhesive connection or a welded connection.

14. Device according to one of the preceding claims, **characterized in that** the holding element (20) has a contour corresponding to the flexible tube (2) or to the pipe (3).

15. Device according to one of the preceding claims, **characterized in that** the holding element (20) is connected to the housing (1) with a cohesive material joint.

16. Device according to one of the preceding claims, **characterized in that** the holding element (20) can be connected to the housing (1) in a frictional manner.

17. Device according to one of the preceding claims, **characterized in that** the holding element (20) is arranged on that side of the housing (1) which is opposite the passage (4, 5).

18. Device according to one of the preceding claims 11 to 17, **characterized in that that** side of the holding element (20) which is arranged opposite the flexible tube (2) or the pipe (3) has at least one retaining element (22).

19. Device according to Claim 18, **characterized in that** the ratio of the width of the holding element (20) to the width of the passage (4, 5) is at least 2.

20. Device according to Claim 18, **characterized in that** the ratio of the length of the holding element (20) to the length of the passage (4, 5) is at least 4.

## Revendications

1. Dispositif utilisé pour la distribution d'agents fluides et/ou gazeux comprenant un tuyau flexible (2) ou une conduite (3) et un boîtier (1) avec un premier passage (4) pour loger un premier agent, avec un deuxième passage (5) pour loger un deuxième agent, avec une chambre de logement de buses (6) reliée aux passages (4, 5) et au moins un élément de serrage (10) pouvant être placé dans le passage (4, 5) et comportant une ouverture (11), **caractérisé en ce que** l'élément de serrage (10) est en liaison active par complémentarité de forces avec le passage (4, 5) par l'intermédiaire du moyen (7), sous la forme d'un filetage, d'une liaison d'encliquetage, d'une fermeture à baïonnette ou similaires, de telle sorte que le tuyau flexible (2) ou la conduite (3) soit disposé(e) de façon comprimée, et ainsi de façon étanche, sur le boîtier (1).

2. Dispositif selon la revendication 1, **caractérisé en ce que** l'ouverture (11) de l'élément de serrage (10) est réalisée en forme de prisme, de fente, d'étoile, de polygone, d'ovale, de cercle ou similaires.

3. Dispositif selon l'une quelconque des revendications précédentes, **caractérisé en ce que** l'ouverture (11) de l'élément de serrage (10) comporte des évidements en forme de prisme, de fente, d'étoile, de polygone, d'ovale, de cercle ou similaires.

4. Dispositif selon la revendication 1, **caractérisé en ce que** la liaison active de l'élément de serrage (10) est réalisée par complémentarité de matières avec le passage (4, 5) par l'intermédiaire du moyen (7), notamment sous la forme d'une liaison par collage, d'une liaison par soudage ou similaires.

5. Dispositif selon l'une quelconque des revendications précédentes, **caractérisé en ce que** l'élément de serrage (10) comporte sur son côté opposé au moyen (7) au moins un col (12), notamment un col (12) réalisé en forme de prisme, d'étoile, de polygone, d'ovale, de cercle ou similaires.

6. Dispositif selon l'une quelconque des revendications précédentes, **caractérisé en ce que** le boîtier (1) comporte un élément de fixation (8) disposé à l'écart du passage (4, 5).

7. Dispositif selon la revendication 6, **caractérisé en ce que** l'élément de fixation (8) prend la forme d'un étai périphérique ou agencé en partie de la sorte.

8. Dispositif selon l'une quelconque des revendications précédentes, **caractérisé en ce que** l'élément de serrage (10) comporte au niveau de son côté orienté vers le passage (4, 5) au moins un élément de fixation (13).

9. Dispositif selon la revendication 8, **caractérisé en ce que** l'élément de fixation (13) prend la forme d'un étai périphérique ou agencé en partie de la sorte.

10. Dispositif selon l'une quelconque des revendications précédentes, **caractérisé en ce que** le premier passage (4) est disposé par rapport au deuxième passage (5) selon un angle d'approximativement 10° à 90°, de façon plus avantageuse selon un angle de 10° à 70° ou de 75° à 90° ou de 35° à 55°.

11. Dispositif selon l'une quelconque des revendications précédentes, **caractérisé en ce que** le boîtier (1) comporte au moins un élément de logement (20) placé en relation active avec au moins un moyen de fixation (9) de telle sorte que le tuyau flexible (2) ou la conduite (3) soit en outre fixé(e) au boîtier (1).

12. Dispositif selon la revendication 11, **caractérisé en ce que** la liaison active de l'élément de logement (20) est réalisée par complémentarité de forces avec le boîtier (1) par l'intermédiaire du moyen de fixation (9), notamment sous la forme d'une bride, d'un collier de câbles connu en soi, d'un câble, d'un fil ou similaires.

13. Dispositif selon la revendication 11, **caractérisé en ce que** la liaison active de l'élément de logement (20) est réalisée par complémentarité de matières avec le boîtier (1) par l'intermédiaire du moyen de fixation (9), notamment sous la forme d'une liaison par collage ou d'une liaison par soudage.

14. Dispositif selon l'une quelconque des revendications précédentes, **caractérisé en ce que** l'élément de logement (20) comporte un contour correspondant au tuyau flexible (2) ou à la conduite (3).

15. Dispositif selon l'une quelconque des revendications précédentes, **caractérisé en ce que** l'élément de logement (20) est relié par complémentarité de matières au boîtier (1).

16. Dispositif selon l'une quelconque des revendications précédentes, **caractérisé en ce que** l'élément de logement (20) peut être relié par complémentarité de forces au boîtier (1).

17. Dispositif selon l'une quelconque des revendications précédentes, **caractérisé en ce que** l'élément de logement (20) est disposé sur le côté du boîtier (1) opposé au passage (4, 5).

18. Dispositif selon l'une quelconque des revendications 11 à 17, **caractérisé en ce que** l'élément de logement (20) comporte au niveau de son côté disposé à l'opposé du tuyau flexible (2) ou de la conduite (3) au moins un élément d'arrêt (22).

19. Dispositif selon la revendication 18, **caractérisé en ce que** le rapport entre la largeur de l'élément de logement (20) et la largeur du passage (4, 5) est au moins de 2.

20. Dispositif selon la revendication 18, **caractérisé en ce que** le rapport entre la longueur de l'élément de logement (20) et la longueur du passage (4, 5) est au moins de 4.
